# EUROPEAN PATENT APPLICATION

(11) **EP 2 017 143 A1**
(43) Date of publication of application: **21.01.2009**
(21) Application number: 07706556.3
(22) Date of filing: 11.01.2007
(51) Int. Cl.: B60R 22/46, B60R 22/28, B60R 22/36

(54) **SEAT BELT RETRACTOR AND SEAT BELT DEVICE**

(30) Priority: 20.04.2006 JP 2006116717
(71) Applicant: TAKATA CORPORATION, Minato-ku, Tokyo 106-8510 (JP)
(72) Inventor: HIRAMATSU, Koji, Tokyo 106-8510 (JP); KANAMORI, Yasushi, Tokyo 106-8510 (JP); MORIMOTO, Miwa, Tokyo 106-8510 (JP)
(74) Representative: Banzer, Hans-Jörg
(86) International application number: PCT/JP2007/050209
(87) International publication number: WO 2007/122824

(57) **Abstract**

[PROBLEMS] To ensure stable EA operation without being affected by action of a pretensioner.

[MEANS FOR SOLVING THE PROBLEMS] A seat belt retractor comprises a torsion bar 7 of which one end in the axial direction is connected to a spool 4 and which is torsionally deformable because of relative displacement between the one end side and the other end side in the axial direction, a pretensioner 11 which is disposed on the other end side in the axial direction of the spool 4 and which rotates the spool 4 in a direction of winding a seat belt 3 when the vehicle rapidly decelerates, a main pawl 12 which is disposed on one end side in the axial direction of the spool 4, and a sub pawl 13 which is disposed on the other end side in the axial direction of the torsion bar 7. During the normal operation, the main pawl 12 is actuated to lock the spool 4 to prevent the spool 4 from rotating in the direction of withdrawing the seat belt 3. When the vehicle rapidly decelerates, the locking of the spool 4 by the main pawl 12 is released, while the sub pawl 13 is actuated to prevent the other end side in the axial direction of the torsion bar 7 from rotating in the direction of withdrawing the seat belt 3.

## Description

### TECHNICAL FIELD

The present invention relates to a seat belt retractor for winding up a seat belt, and particularly to a seat belt retractor having an EA mechanism capable of absorbing inertia energy applied to an occupant when the seat belt is locked to restrain the occupant from moving in the event of an abnormality.

### BACKGROUND ART

Seat belt apparatus arranged for a vehicle seat is an essential apparatus as an apparatus for restraining an occupant from rapidly moving due to an acceleration produced during a vehicle collision, thereby ensuring safety of the occupant's body.

The seat belt apparatus generally comprises a seat belt (webbing), a seat belt retractor, and a buckle device.

The retractor retracts the seat belt into the inside thereof by means of spring force to wind the seat belt onto a winding member (spool) and normally accommodates the seat belt in the retracted state. When the occupant puts on the seat belt, the occupant pulls a tongue plate provided on one end of the seat belt on an opposite side from the winding side so as to withdraw the aforementioned accommodated seat belt and latches the tongue plate to the aforementioned buckle device disposed on a side of the vehicle seat, thereby wearing the seat belt.

The retractor having the aforementioned structure locks the seat belt from being withdrawn from the winding member in the event of a collision where an impact acts so that the occupant's body is restrained from rapidly moving forward by the seat belt which is locked. The seat belt apparatus is normally provided with a pretensioner and a locking mechanism in order to further strongly restrain the occupant when the vehicle rapidly decelerates.

The pretensioner is a device for removing a slack of the seat belt when an acceleration sensor detects that the vehicle rapidly decelerates so as to improve the restraining force by the seat belt. For example, there is a style in which gas is generated from a gas generating means in response to a detection signal from the aforementioned acceleration sensor so as to inflate an envelope member with the gas, thereby eliminating the slack of the seat belt because of shortening of the entire length in the longitudinal direction of an inflatable structure. Alternatively, there is another style in which a piston slides within a cylinder by gas from a gas generating means to rotate the spool in the winding direction via a pinion, thereby eliminating the slack of the seat belt.

The locking mechanism comprises a locking member (locking base) which rotates together with the spool. In response to a detection signal of the aforementioned acceleration sensor, an engaging member (pawl) provided on the locking base engages inner teeth (ratchet teeth) provided on a fixed member (a frame of the retractor or the like) of the vehicle so as to restrict the locking base and the spool from rotating in the withdrawing direction.

On the other hand, as the occupant is restrained from rapidly moving forward when the vehicle rapidly decelerates as mentioned above, an impact force is applied to the occupant's chest and the like via the seat belt due to a reaction force of the restraint. To absorb the impact force applied to the occupant, there is known a mechanism for absorbing impact energy acting on the occupant (Energy Absorption (hereinafter, refereed to "EA") mechanism) by paying out a predetermined length of the seat belt while keeping the predetermined withdrawing load of the seat belt with applying a paying-out resistance of a certain value or higher on the seat belt immediately after the locking.

In this mechanism, a plastically deformable shaft (torsion bar) is arranged inside the spool on which the seat belt is wound so that one end of the torsion bar is connected to the spool and the other end of the torsion bar is connected to the locking base. The tension of the seat belt restraining the occupant from moving forward due to inertia force makes a relative rotation force of one end side of the torsion bar in the seat belt withdrawing direction relative to the other end side of the torsion bar. As the relative rotation force becomes a certain value or higher, the torsion bar plastically deforms so as to absorb the impact energy because of the plastic deformation resistance. Therefore, the spool is allowed to rotate in the seat belt withdrawing direction little by little even though the locking mechanism works, the seat belt is paid out while predetermined tension acts on the seat belt, thereby absorbing the force between the seat belt and the occupant's body.

For example, Patent document 1 discloses a seat belt retractor comprising a pretensioner, a locking mechanism, and an EA mechanism as mentioned above, wherein when the spool is allowed to slightly rotate in the seat belt withdrawing direction during the operation of the EA mechanism as mentioned above, the pretensioner is also rotationally connected to the spool so as to act to rotate the spool in the seat belt winding direction (i.e. the opposite direction) as mentioned above.
Patent document 1: JP2002-120693A

### DISCLOSURE OF THE INVENTION

### PROBLEMS TO BE SOLVED BY THE INVENTION

However, the aforementioned prior art has the following drawbacks.

That is, the aforementioned prior art has such a structure that one end portion of the spool which is connected to the torsion bar is connected to the pretensioner and a locking base to be locked by the locking mechanism is connected to the other end side of the torsion bar. Even when the other end side of the torsion bar is locked from rotating in the winding direction by the locking mechanism after the pretensioner acts to rotate the spool in the winding direction, the pretensioner may inhibit the operation of the EA mechanism in which the one end side of the torsion bar is twisted relative to the other end side thereof so as to relatively rotate, because the direction of the action of the pretensioner is opposite to the direction of the relative rotation. That is, the operation of the EA mechanism is affected by the operation of the pretensioner so that it is difficult to ensure stable operation.
It is an object of the present invention to provide a seat belt retractor capable of ensuring the stable EA operation without being affected by the action of the pretensioner.

### MEANS FOR SOLVING THE PROBLEMS

For achieving the object, a seat belt retractor of the first invention of the present application is characterized by comprising a spool for winding up a seat belt; a torsion bar which is arranged inside in the radial direction of said spool and one end side in the axial direction of which is connected to said spool and which torsionally deforms due to relative displacement between the one end side in the axial direction thereof and the other end side in the axial direction thereof so as to absorb kinetic energy of an occupant; a pretensioner which is disposed on the other end side in the axial direction of said spool and which produces rotational driving force for rotating said spool in the direction of winding said seat belt when the vehicle rapidly decelerates; and a switching mechanism which locks said spool relative to a stationary member of said vehicle to prevent said spool from rotating in the direction of withdrawing said seat belt during normal operation, and releases the locking of said spool relative to said stationary member when the vehicle rapidly decelerates, and which locks the other end side in the axial direction of said torsion bar to said stationary member to prevent the other end side of said torsion bar from rotating in the direction of withdrawing said seat belt when said pretensioner generates rotational driving force so as to cause rotational displacement in which the other end side in the axial direction of said torsion bar advances in the direction of winding said seat belt relative to the spool.

In the first invention of the present application, during the normal operation (including a slow deceleration of the vehicle. The same is true on the following), the switching mechanism first prevents the spool from rotating in the direction of withdrawing the seat belt.

On the other hand, when the vehicle rapidly decelerates, the pretensioner is actuated in response to the rapid deceleration so that the spool is rotated in the seat belt winding direction via the torsion bar by rotational driving force of the pretensioner, thereby improving the restraint force for the occupant by the seat belt. After that, the seat belt is pulled with large force exceeding a predetermined value by the occupant's body because of inertia of the rapid deceleration of the vehicle so that large force in the direction of withdrawing the seat belt acts on the spool. When the vehicle rapidly decelerates, the switching mechanism releases the locking of the spool (that is, one end side in the axial direction of the torsion bar) to the stationary member and locks the other end side of the torsion bar to the stationary member. Therefore, the one end side of the torsion bar and the spool connected thereto rotationally displace relative to the other end side in the axial direction of the torsion bar. By the torsional deformation of the torsion bar, kinetic energy of the occupant can be absorbed (EA mechanism). Since the pretensioner is located on the other end side of the spool, the operation of the EA mechanism in which the one end side of the torsion bar is twisted relative to the other end side of the torsion bar as mentioned above is not affected by the action of the pretensioner, thereby ensuring stable operation.

As mentioned above, in the first invention of the present application, the spool connected to the one end side in the axial direction of the torsion bar is locked during the normal operation, while only the other end side of the torsion bar is locked and the one end side of the torsion bar and the spool connected thereto are released to achieve the torsional deformation of the torsion bar when the vehicle rapidly decelerates. Therefore, the stable EA action without being affected by the action of the pretensioner can be ensured.

The second invention has the same components as those of the aforementioned first invention and is characterized by further comprising: a locking member which is located on the other end side in the axial direction of said spool and is connected to the other end side in the axial direction of said torsion bar, wherein said pretensioner applies rotational driving force, for rotating said spool in the direction of winding said seat belt, to said locking member when said vehicle rapidly decelerates, and wherein said switching mechanism comprises a first engaging member for locking said locking member to the stationary member of said vehicle.

When the vehicle rapidly decelerates, the pretensioner applies rotational driving force to the locking member, whereby the spool is rotated in the seat belt winding direction via the locking member and the torsion bar. The switching mechanism comprises the first engaging member, thereby locking the locking member to the stationary member of the vehicle such as a frame.

The third invention has the same components as those of the second invention and is characterized in that said first engaging member is a pawl which is pivotally disposed on said locking member and locks said locking member when a relative rotational displacement is caused between said locking member and said spool.

Since the first engaging member is the pawl, the pawl is pivotally moved to lock the locking member when the pretensioner applies rotational driving force to the locking member so as to cause a relative rotational displacement between the locking member and the spool when the vehicle rapidly decelerates.

The fourth invention has the same components as those of the third invention and is characterized in that either one of a pivot shaft of said first engaging member and said spool is provided with a shear portion which is engaged with the other one of the pivot shaft and said spool to prevent said pivot shaft from rotating and which fractures according to load applied, and that said first engaging member is a pawl which is allowed to pivot freely and is biased in a direction of locking said locking member by a spring so as to conduct its locking action when said shear portion fractures.

Since the first engaging member is a pawl biased by the spring and the pivot shaft of the pawl and the spool are connected to each other by the shear portion, the shear portion fractures when the pretensioner applies rotational driving force to the locking member so as to cause a relative rotational displacement between the locking member and the spool when the vehicle rapidly decelerates. The fracture of the shear pin first makes the pawl thus free to pivot so that the pawl is pivotally moved in the direction of locking the locking member by the biasing force of the spring so as to conduct locking action of the locking member.

The fifth invention has the same components as those of the fourth invention and is characterized in that said spring biases said pawl only when said locking member is rotated in the direction of winding said seat belt by said rotational driving force of said pretensioner.

Until the pretensioner produces rotational driving force and the locking member is thus rotated in the direction of winding the seat belt, the spring does not bias the pawl so that no unnecessary load acts on the shear portion engaged between the pivot shaft of the pawl and the spool, thereby making the shear portion fracture at suitable timing.

The sixth invention has the same components as those of any one of the second through fifth inventions and is characterized in that said switching mechanism comprises a second engaging member for locking said spool to the stationary member of said vehicle.

By the second engaging member of the switching mechanism, the spool is locked to the stationary member of the vehicle such as a frame.

The seventh invention has the same components as those of the sixth invention and is characterized in that said second engaging member is a pawl which is pivotally disposed on one end side in said axial direction of said spool and which locks said spool according to the deceleration of said vehicle.

Since the second engaging member is the pawl, the pawl is pivotally moved according to a deceleration of the vehicle, for example, in response to a signal from a sensor, to conduct the locking of the spool.

The eighth invention has the same components as those of the seventh invention and is characterized in that said locking member has a cam body disposed around the periphery of said torsion bar; that said second engaging member has a cam shaft extending from the pivot shaft and a cam head disposed on the other end side in said axial direction of said cam shaft; and that said cam body is configured to allow pivotal movement of said cam head such that the second engaging member can switch between the operation of locking said spool and the operation of unlocking said spool while there is no relative rotational displacement between said spool and said locking member, and to bring said cam head to come in contact with the cam body so as to force said second engaging member to unlock said spool when a relative rotational displacement is caused between said spool and said locking member.

Therefore, the pawl is pivotally moved according to a deceleration of the vehicle, for example, in response to a signal from a sensor, to switch the spool between the locked state and the unlocked state during the normal operation. In addition, when the vehicle rapidly decelerates, the pretensioner applies rotational driving force to the locking member to cause relative rotational displacement between the locking member and the spool. Because of the relative rotational displacement, the locking of the spool by the pawl is released so as to allow the one end side of the torsion bar to rotate relative to the other end side.

The ninth invention has the same components as those of the eighth invention and is characterized in that said second engaging member is configured such that its barycentric position is located near its pivotal center.

Since the barycentric position of the second engaging member is located near its pivotal center, rotation moment generated around the pivotal center by centrifugal force applied to the barycentric position of the second engaging member is kept small even when the spool is rotated. That is, even when the spool is rotated, the second engaging member is not affected by the centrifugal force and the movement of the second engaging member about the pivotal center thereof can be stable.

For achieving the aforementioned object, the tenth invention is characterized by comprising: a spool for winding up a seat belt; a torsion bar which is arranged inside in the radial direction of said spool and one end side in the axial direction of which is connected to said spool and which torsionally deforms due to relative displacement between the one end side in the axial direction thereof and the other end side in the axial direction thereof so as to absorb kinetic energy of an occupant; a locking base which is located on the other end side in the axial direction of said spool and is connected to the other end side in said axial direction of said torsion bar; a pretensioner which is disposed on the other end side in said axial direction of said spool and which produces rotational driving force for rotating said spool in the direction of winding said seat belt when the vehicle rapidly decelerate and transmits the rotational driving force to said locking base; and a first pawl of which pivot shaft is pivotally supported on said locking base, wherein during the normal operation, a shear portion as a part of said pivot shaft is engaged with said spool so that said first pawl is prevented from pivotally moving, and when a relative rotational displacement is caused between said locking base and said spool by the operation of said pretensioner, said shear portion fractures so that the first pawl is free to pivotally move and said first pawl thus locks said locking base to a stationary member of said vehicle by biasing force of a spring; and a second pawl which is pivotally disposed on one end side in said axial direction of said spool, wherein during the normal operation, said second pawl locks said spool to the stationary member of said vehicle according to the deceleration of said vehicle, and said second pawl has a cam mechanism which releases the locking of said spool when a relative rotational displacement is caused between said locking base and said spool by the operation of said pretensioner, wherein said cam mechanism has a cam shaft extending from the pivot shaft of said second pawl and a cam head which pivotally moves said second engaging member (sic) through said cam shaft by moving along the configuration of a cam body formed on said locking base when a relative rotational displacement is caused between said spool and said locking base, and said pawl is pivotally moved to release the locking of said spool when a rotational displacement in which said spool advances in the direction of withdrawing said seat belt relative to said locking base is caused.

In the tenth invention, during the normal operation, the shear portion is in non-fractured state in which the shear portion still does not fracture so that the first pawl is in the unlocked state in which the locking base is not locked to the stationary member of the vehicle. As the second pawl locks the spool to the stationary member of the vehicle according to the deceleration of the vehicle, the spool is prevented from rotating in the direction of withdrawing the seat belt.

On the other hand, when the vehicle rapidly decelerates, the pretensioner is actuated as a first step. By the rotational driving force of the pretensioner, the locking base, the torsion bar, and the spool are rotated in the direction of winding the seat belt, thereby improving the restraint force for the occupant by the seat belt. During this, a rotational displacement in which the locking base advances in the direction of winding the seat belt relative to the spool is caused, that is, a rotational displacement in which the spool advances in the direction of withdrawing the seat belt relative to the locking base is caused. Accordingly, the second pawl releases the locking of the spool by means of the cam mechanism. By the further action of the pretensioner, the relative rotational displacement between the locking base and the spool makes the shear portion fracture so that the first pawl locks the locking base to the stationary member of the vehicle by biasing force of a spring.

As a result, the one end side in the axial direction of the torsion bar connected to the spool rotationally displaces relative to the other end side in the axial direction thereof (fixed to the locking base which is locked by the first pawl as mentioned above) so as to absorb the kinetic energy of the occupant by the torsional deformation of the torsion bar (EA mechanism). Since the pretensioner is located on the other end side of the spool and is connected to the locking base, the operation of the EA mechanism in which the one end side of the torsion bar is twisted relative to the other end side of the torsion bar as mentioned above is not affected by the action of the pretensioner, thereby ensuring stable operation.

For achieving the aforementioned object, a seat belt apparatus of the eleventh invention is characterized by comprising: a seat belt for restraining an occupant; a seat belt retractor for winding up one end side of said seat belt in such a manner as to allow said seat belt to be withdrawn; a tongue which is attached to said seat belt; and a buckle device which can be latched said the tongue to wear said seat belt to the occupant, wherein said seat belt retractor comprises: a spool for winding up said seat belt; a torsion bar which is arranged inside in the radial direction of said spool and one end side in the axial direction of which is connected to said spool and which torsionally deforms due to relative displacement between the one end side in the axial direction thereof and the other end side in the axial direction thereof so as to absorb kinetic energy of an occupant; a pretensioner which is disposed on the other end side in the axial direction of said spool and which produces rotational driving force for rotating said spool in the direction of winding said seat belt when the vehicle rapidly decelerates; and a switching mechanism which locks said spool relative to a stationary member of said vehicle to prevent said spool from rotating in the direction of withdrawing said seat belt during normal operation, and releases the locking of said spool relative to said stationary member when the vehicle rapidly decelerates, and which locks the other end side in the axial direction of said torsion bar to said stationary member to prevent the other end side of said torsion bar from rotating in the direction of withdrawing said seat belt when said pretensioner generates rotational driving force so as to cause rotational displacement in which the other end side in the axial direction of said torsion bar advances in the direction of winding said seat belt relative to the spool is caused.

In the eleventh invention of the present application, during the normal operation, the switching mechanism of the seat belt retractor first prevents the spool from rotating in the direction of withdrawing the seat belt.

On the other hand, when the vehicle rapidly decelerates, the pretensioner is actuated in response to the rapid deceleration so that the spool is rotated in the seat belt winding direction via the torsion bar by rotational driving force of the pretensioner, thereby improving the restraint force for the occupant by the seat belt. After that, the seat belt is pulled with large force exceeding a predetermined value by the occupant's body because of inertia of the rapid deceleration of the vehicle so that large force in the direction of withdrawing the seat belt acts on the spool. When the vehicle rapidly decelerates, the switching mechanism releases the locking of the spool (that is, one end side in the axial direction of the torsion bar) to the stationary member and locks the other end side of the torsion bar to the stationary member. Therefore, the one end side of the torsion bar and the spool connected thereto rotationally displace relative to the other end side in the axial direction of the torsion bar. By the torsional deformation of the torsion bar, kinetic energy of the occupant can be absorbed (EA mechanism). Since the pretensioner is located on the other end side of the spool, the operation of the EA mechanism in which the one end side of the torsion bar is twisted relative to the other end side of the torsion bar as mentioned above is not affected by the action of the pretensioner, thereby ensuring stable operation.

As mentioned above, in the eleventh invention of the present application, the spool connected to the one end side in the axial direction of the torsion bar is locked during the normal operation, while only the other end side of the torsion bar is locked and the one end side of the torsion bar and the spool connected thereto are released to achieve the torsional deformation of the torsion bar when the vehicle rapidly decelerates. Therefore, the stable EA action without being affected by the action of the pretensioner can be ensured.

### EFFECT OF THE INVENTION

According to the present invention, stable EA action can be ensured without being affected by action of a pretensioner.

### BEST MODE FOR CARRYING OUT THE INVENTION

Hereinafter, an embodiment of the present invention will be described with reference to drawings. This embodiment is an example of case where the present invention is adapted to a seat belt apparatus of an automobile.

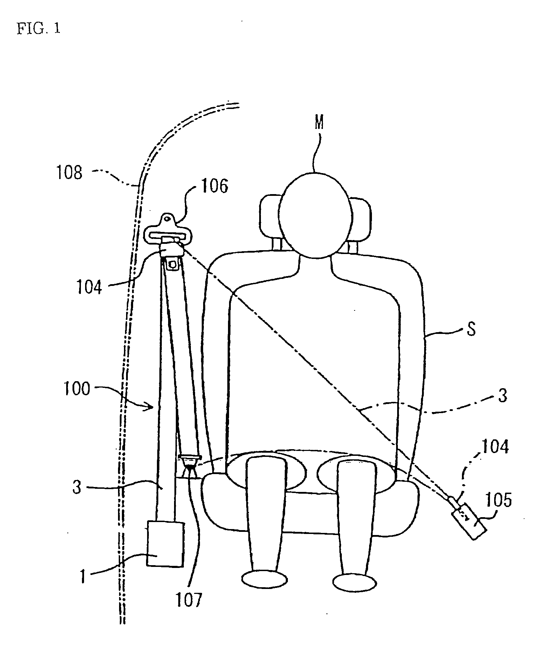

Fig. 1 is a front view showing the entire structure of a seat belt apparatus comprising a seat belt retractor of a first embodiment together with an occupant.

In Fig. 1, the seat belt apparatus 100 is arranged inside a vehicle body 108 of a vehicle and comprises a seat belt 3 for restraining an occupant M to a vehicle seat S, a seat belt retractor 1 for winding up one end side of the seat belt 3 in such a manner as to allow the seat belt 3 to be withdrawn, a tongue 104 which is slidably attached to the seat belt 3, and a buckle device 105 which can be latched with the tongue 104.

The seat belt 3 has one end which is wound up by the seat belt retractor 1 as mentioned above, a middle portion which is inserted into a deflection fitting 106, and the other end which is pivotally connected to the vehicle body 108 by a fastener 107.

Hereinafter, the seat belt retractor of the embodiment according to the present invention will be described.

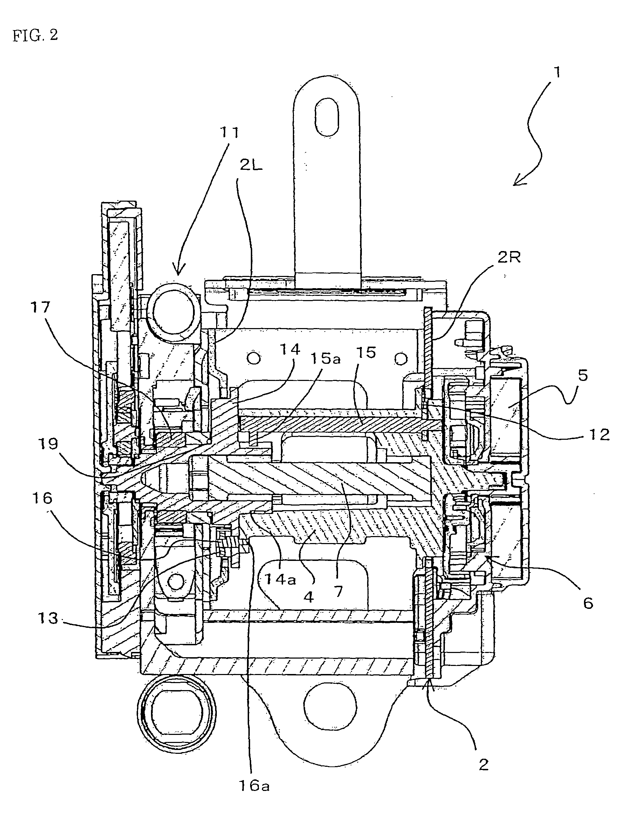

Fig. 2 is a vertical sectional view showing the entire schematic structure of the seat belt retractor 1 of this embodiment. In Fig. 2, the seat belt retractor 1 comprises a U-like frame 2 (stationary member) having two parallel side walls 2L, 2R and a back wall (not shown) connecting these side walls 2L, 2R, a spool 4 which is rotatably supported between the side walls 2L, 2R of the frame 2 to wind up the seat belt 3 (not shown in Fig. 2), a deceleration sensing means (not shown) which detects a slow deceleration which is caused in the event of a vehicle light collision or the like and is thus actuated, a lock actuating mechanism 6 which is actuated by the deceleration sensing means to prevent at least the rotation of the spool 4 in the belt withdrawing direction, a torsion bar 7 which is fitted into the spool 4 with some looseness in the radial direction of the spool 4 to extend in the axial direction of the spool 4 and of which one end (the right end in Fig. 2) in the axial direction is connected to the spool 4 so that the torsion bar 7 is twisted because of relative deformation between the one end side and the other end side (the left side in Fig. 2) in the axial direction so as to absorb kinetic energy of the occupant, a spiral spring 5 for always biasing the spool 4 in the belt winding direction, a main pawl 12 (the second pawl, the second engaging member) which is pivotally supported at the one end side in the axial direction of the spool 4 to lock the spool 4 to the frame 2 according to the deceleration of the vehicle, a locking base 14 (the locking base, the locking member) which is rotatably supported on the frame 2 at the other end side (the left side in Fig. 2) of the torsion bar 7 and the spool 4 and is fixed to the other end side (the left side in Fig. 2) in the axial direction of the torsion bar 7, a sub pawl 13 (the first pawl, the first engaging member) which is pivotally supported on the locking base 14 to lock the locking base 14 to the side wall 2L of the frame 2 in the event of a rapid deceleration of the vehicle, a pretensioner 11 which is located at the other end side in the axial direction (the left side in Fig. 2) of the torsion bar 7 and the spool 4 and is actuated in the event of a rapid deceleration of the vehicle such as an emergency to produce rotation driving force for rotating the spool 4 in the direction of winding the seat belt 3 and transmitting the force to the locking base 14, and a cam shaft 15 which projects from the pivot shaft of the main pawl 12 to extend through the spool 4 to the vicinity of the locking base 14.

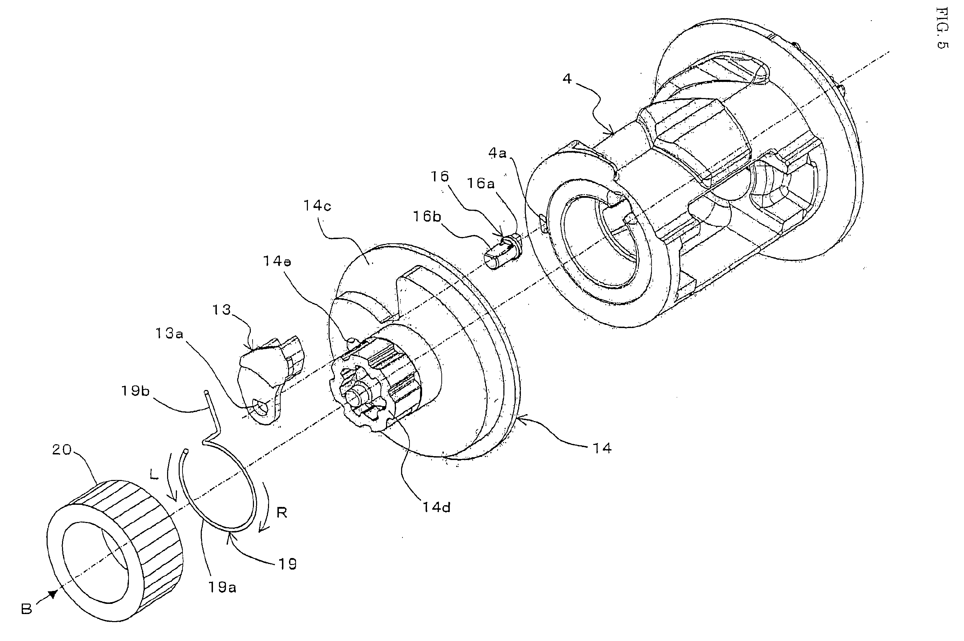

The spool 4 is always biased in the direction of winding the seat belt 3 by spring force of the spiral spring 5. The other side in the axial direction of the spool 4 is connected to the locking base 14 via a sub pawl pivot shaft 16 of the sub pawl 13 (see Fig. 5 as will be described later) so that the spool 4 and the locking base 14 are rotated together until a shear portion 16a of the sub pawl pivot shaft 16 fractures as will be described later. Accordingly, it can be said the locking base 14 cooperates with the spool 4 to compose "spool means" for winding up or withdrawing the seat belt 3.

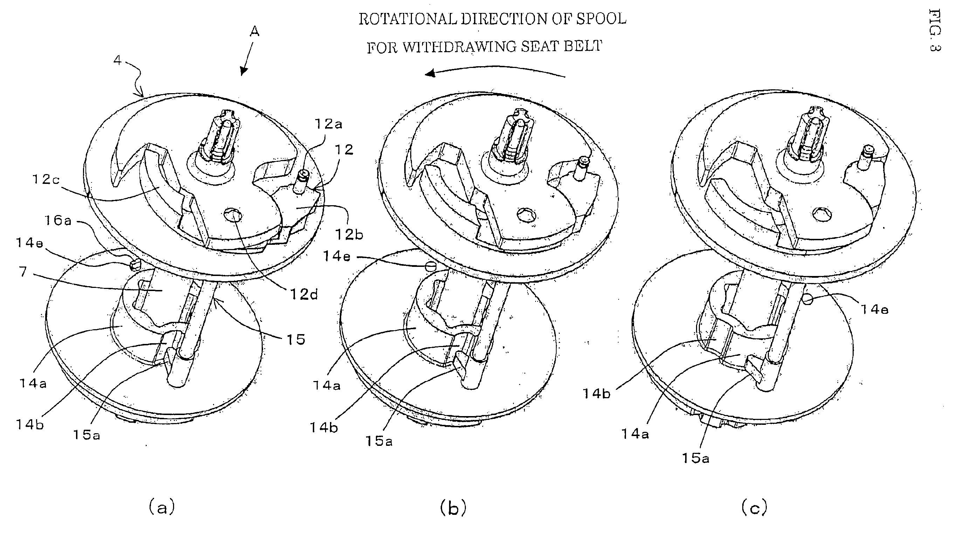

Figs. 3(a)-3(c) are illustrations for explaining the structure of the main pawl 12 on the spool 4, wherein Fig. 3(a) is an illustration showing the main pawl 12 in the locked state, Fig. 3(b) is an illustration showing the main pawl 12 in a state between the locked state and the unlocked state, and Fig. 3(c) is an illustration showing the main pawl 12 in the unlocked state. For avoiding complication, illustration of the cylindrical portion of the spool 4 is omitted.

In Figs. 3(a)-3(c), the one end side in the axial direction (the upper side in Figs. 3(a)-3(c)) of the torsion bar 7 is fixedly connected to the spool 4, while the other end side in the axial direction (the lower side in Figs. 3(a)-3(c)) of the torsion bar 7 is fixedly connected to the locking base 14.

The main pawl 12 comprises a main pawl head 12b and a balance portion 12c which are arranged on both sides of a main pawl pivot shaft 12d and has an operation pin 12a formed on the surface, facing the lock actuating mechanism 6, of the main pawl head 12b. Formed on an end portion of the cam shaft 15, extending from the main pawl pivot shaft 12d, at the other side in the axial direction (the lower side in Figs. 3(a)-3(c)) is a cam head 15a projecting in the radial direction of the cam shaft 15. On the other hand, formed on the surface, facing the spool 4, of the locking base 14 is a cam body 14a which is cylindrical and is disposed to surround the outer periphery of the torsion bar 7. The cam body 14a has a receiving groove 14b formed in the outer periphery thereof.

When the shear portion 16a of the sub pawl pivot shaft 16 does not fracture so that the locking base 14 and the spool 4 are in the normal positional relation without relative rotation, that is, when the locking base 14 and the spool 4 are in the positional relation shown in Fig. 3(a), the receiving groove 14b of the cam body 14a and the cam shaft 15 coincide with each other in a circumferential position around the shaft of the torsion bar 7. Since the receiving groove 14b of the cam body 14a is formed into an arc shape to partially fit the rotational trajectory of the cam head 15a when the cam shaft 15 is rotated, the cam shaft 15 and the main pawl 12 are allowed to rotate for a rotational angle corresponding to the angle of the arc of the receiving groove 14b. When the shear portion 16a of the sub pawl pivot shaft 16 fractures from this state so as to cause relative rotational displacement between the locking base 14 and the spool 4, the cam head 15a is moved along the outer periphery of the cam body 14a other than the receiving groove 14b so as to rotate the cam shaft 15 and the main pawl 12 so that the main pawl head 12b moves to an inner peripheral position on the spool 4.

The pivotal movement of the main pawl 12 will be described concretely. During the normal operation, the locking base 14 and the spool 4 are in the positional relation shown in Fig. 3(a). Since, in this state, the pivotal movement of the main pawl 12 is allowed as mentioned above, the state of the main pawl 12 can be freely switched by operating the operation pin 12a between the locked state (the state shown in Fig. 3(a)) in which the main pawl head 12b projects to an outer peripheral position on the spool 4 and the unlocked state (the unlocked state in this case is not shown) in which the main pawl head 12b is accommodated at the inner peripheral position.

The lock actuating mechanism 6 is similar to a known one of this type and is adapted to move the operation pin 12a shown in Figs. 3(a)-3(c) to the outer peripheral position according to the actuation of the deceleration sensing means by a slow deceleration of the vehicle so as to make the main pawl head 12b project from the spool 4 to the outer peripheral position and become to the locked state. Accordingly, the main pawl head 12b is engaged (meshed) with inner teeth (not shown) of the side wall 2R of the frame 2, thereby preventing the spool 4 from rotating in the direction of withdrawing the seat belt 3. After the vehicle stops and becomes to the stable state, the lock actuating mechanism 6 returns the operation pin 12a to the inner peripheral position so as to release the locking of the main pawl head 12b.

When, from the locked state in which the cam head 15a is located within the receiving groove 14b of the cam body 14a and the main pawl head 12b projects to the outer peripheral position on the spool 4, the shear portion 16a of the sub pawl pivot shaft 16 fractures by the operation of the pretensioner 11 during a rapid deceleration of the vehicle as will be described later so as to cause rotational displacement in which the spool 4 advances in the direction of withdrawing the seat belt 3 relative to the locking base 14 (relative rotational displacement in which the spool 4 rotates in the counter-clockwise direction if the locking base 14 is the stationary side in Figs. 3(a)-3(c)). During this, as shown in Fig. 3(b), the cam head 15a comes off from the receiving groove 14b and rides on the outer periphery of the cam body 14a taking a more outer position so as to move the main pawl head 12b to the inner peripheral position on the spool 4. When the spool 4 achieves enough relative rotational displacement in the direction of withdrawing the seat belt 3 relative to the locking base 14, the main pawl head 12b is accommodated completely at the inner peripheral position on the spool 4 so that the main pawl becomes to the unlocked state as shown in Fig. 3(c).

As mentioned above, during the normal operation (including a slow deceleration of the vehicle. The same is true on the following), the main pawl 12 can be freely switched between the locked state and the unlocked state according to the operation of the operation pin 12a by the lock actuating mechanism 6. Further, when the pretensioner 11 is actuated at a rapid deceleration, the shear portion 16a of the sub pawl pivot shaft 16 fractures so as to cause relative rotational displacement between the locking base 14 and the spool 4, thereby forcing the main pawl 12 into the unlocked state and thus release the locked state of the spool 4 relative to the frame 2.

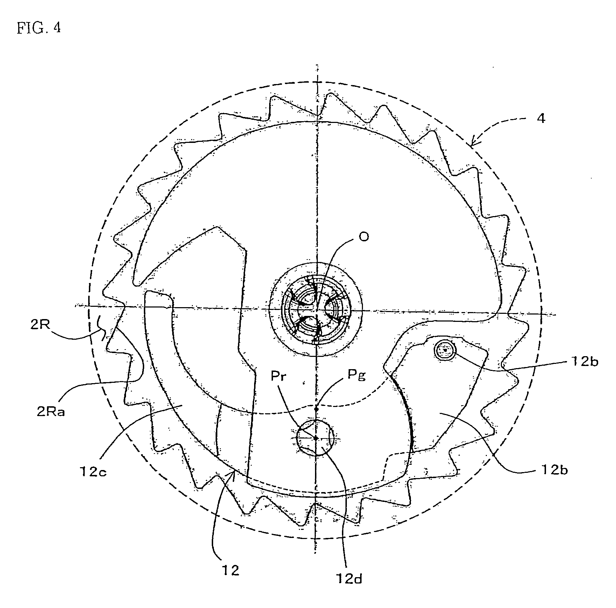

Fig. 4 is an external view showing the end surface, on one side in the axial direction, of the spool 4 and the frame as seen along an arrow A in Fig. 3. In Fig. 4, the internal teeth 2Ra, with which the main pawl head 12b in the locked state engages, are formed in the side wall 2R of the frame 2 supporting one side in the axial direction of the spool 4. The main pawl 12 is formed in a substantially arc shape as a whole and has the main pawl head 12b and the balance portion 12c which are arranged on both sides of the main pawl pivot shaft 12d supported by the spool 4 as mentioned above. According to this configuration, the barycentric position Pg of the main pawl 12 as a whole is located near the pivotal center Pr of the main pawl pivot shaft 12d. Though rotation moment is generated around the center of rotation by centrifugal force applied to the barycentric position Pg of the main pawl 12, this arrangement can keep the rotation moment small even when the spool 4 is rotated. That is, even when the spool 4 is rotated at a high speed, the main pawl 12 as a whole is not affected and the movement of the main pawl 12 about the pivotal center thereof can be stable.

As the barycentric position Pg is positioned nearer to a line connecting the rotation center O of the spool 4 and the pivotal center Pr of the main pawl 12, the main pawl 12 can be more stable. As the barycentric position Pg is positioned nearer to the balance portion 12c over the line, this arrangement facilitates the retraction of the main pawl head 12b to the inner side of the spool 4, thereby preventing undesired locked state.

Fig. 5 is an exploded perspective view for explaining the arrangement of the peripheral components of the locking base 14 positioned on the other side in the axial direction of the spool 4. For avoiding complication, illustration of the torsion bar 7 is omitted. In Fig. 5, the locking base 14 comprises a disk portion 14c and a shaft portion 14d which is formed integrally with the disk portion 14c at the center of the surface on the other side in the axial direction (the left side in Fig. 5) of the disk portion 14c. The end portion on the other side in the axial direction of the torsion bar 7 (not shown) is coaxially fixed to the back of the shaft portion 14d.

The sub pawl pivot shaft 16 is inserted into both a rectangular fitting hole 4a formed in the end surface on the other side in the axial direction of the spool 4 and a circular pivot hole 14e formed in the disk portion 14c of the locking base 14 and is caught between the spool 4 and the locking base 14. The sub pawl pivot shaft 16 comprises the shear portion 16a of a rectangular parallelepiped which is fitted into the fitting hole 4a of the spool 4 and a shaft portion 16b which has a flat key formed therein and thus has a D-shaped section. The shear portion 16a and the shaft portion 16b are integrally formed. The shear portion 16a is fitted into the fitting hole 4a of the spool 4 and the shaft portion 16b is fitted into the pivot hole 14e of the locking base 14. In this state, the shaft portion 16b projects from the end surface on the other side in the axial direction of the locking base 14 and the projection of the sub pawl pivot shaft 16 is fitted into a connection hole 13a of the sub pawl 13, having the same D-shape as the section of the shaft portion 16b, so that the sub pawl 13 is fixedly connected to the sub pawl rotary shaft 16. Until the shear portion 16a fractures (description about the fracture will be made later), the shaft portion 16b of the sub pawl rotary shaft 16 is fitted into the circular pivot hole 14e but is fixed not to be allowed to rotate. In this state, the sub pawl 13 connected to the shaft portion 16b becomes in the unlocked state in which the sub pawl 13 is retracted at an inner peripheral portion on the locking base 14.

A ring spring 19, having an arc portion 19a which is substantially circle and a biasing portion 19b extending radially from one end of the arc portion 19a, is fitted to the outer periphery of the shaft portion 14d of the locking base 14 and a fixing ring 20 is fitted to the shaft portion 14d so as to fix the ring spring 19 to the shaft portion 14d. The biasing portion 19b of the ring spring 19 is in contact with the sub pawl 13. The fixing ring 20 is provided with ratchet grooves radially formed in an end surface on the back side (the right behind in Fig. 5) thereof, but not specifically shown. The ratchet grooves press the arc portion 19a of the ring spring 19 so that no biasing force acting on the rotation in the R direction is applied to the ring spring 19, but biasing force acting on the rotation in the opposite L direction is applied to the ring spring 19.

This is an arrangement for applying biasing force to the ring spring 19 only when rotational driving force from the pretensioner 11 as will be described later in the seat belt winding direction is applied, thereby pivotally moving the sub pawl 13 to the outer peripheral position on the spool 4. However, even when the biasing force of the ring spring 19 is applied to the sub pawl 13, the shaft portion 16b of the sub pawl pivot shaft 16 and the sub pawl 13 are restricted not to rotate until the shear portion 16a of the sub pawl pivot shaft 16 fractures as mentioned above. Accordingly, until the pretensioner 11 produces rotational driving force to rotate the locking base 14 in the direction of winding the seat belt 3, the ring spring 19 does not bias the sub pawl 13 so that the sub pawl pivot shaft 16 does not act undesired load to the shear portion 16a engaged with the spool 4, thereby making the shear portion 16a fracture at a suitable timing.

The shear portion 16a of the sub pawl pivot shaft 16 fractures only when the pretensioner 11 is actuated in the event of a vehicle rapid deceleration such as an emergency so that the rational driving force for rotating the spool 4 in the direction of winding the seat belt 3 is transmitted to the locking base 14 and, after that, relative rotational displacement is caused between the locking base 14 and the spool 4. The shear portion 16a of the sub pawl pivot shaft 16 is made of such a material and formed in such a configuration as to fracture according to load applied. that is, has such a fracture strength that the shear portion 16a does not fracture with the biasing force of the ring spring 19, but fractures with force produced by the pretensioner 11 exceeding the rotational driving force of the locking base 14.

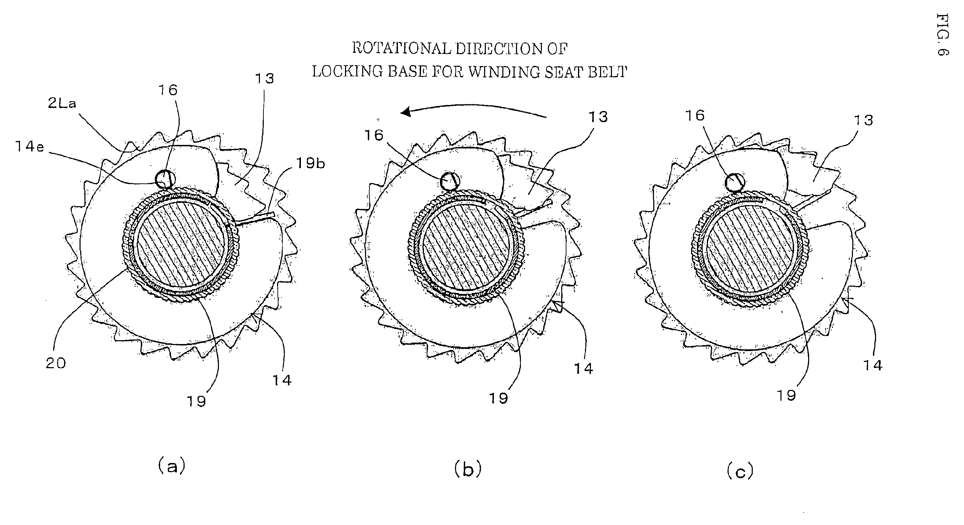

Figs. 6(a)-6(c) are illustrations for explaining the action of the sub pawl 13 when the locking base 14 and the frame are seem along an arrow B in Fig.5, wherein Fig. 6(a) is an illustration showing the sub pawl 13 in the unlocked state, Fig. 6(b) is an illustration showing the sub pawl 13 in a state between the unlocked state and the locked state, and Fig. 6(c) is an illustration showing the sub pawl 13 in the locked state.

In Figs. 6(a)-6(c), inner teeth 2La with which the sub pawl 13 in the locked state can be engaged are formed in the side wall 2L of the frame 2 supporting the locking base 14. Fixed to the locking base 14 is a pinion 17 for torque transmission (see Fig. 2) to which the rotational driving torque of the pretensioner 11 is transmitted.

Now, action of the sub pawl 13 will be described concretely. The pretensioner 11 is actuated in the event of a rapid deceleration of the vehicle so that the rotational driving force for rotating the spool 4 in the direction of winding the seat belt 3 is transmitted to the locking base 14. Until the shear portion 16a (not shown in Figs. 6(a)-6(c)) of the sub pawl pivot shaft 16 fractures, biasing force of the ring spring 19 is applied to the sub pawl 13 in a direction toward the outer periphery, but the sub pawl pivot shaft 16 keeps the sub pawl 13 in the unlocked state, in which the sub pawl 13 is accommodated at an inner peripheral position on the locking base 14, against the biasing force of the ring spring 19 as shown in Fig. 6(a). When, from this state, force of withdrawing the seat belt 3 is further applied while the rotational driving force of the pretensioner 11 is still applied, the shear portion 16a of the sub pawl pivot shaft 16 fractures and is thus broken. Accordingly, the sub pawl 13 is released to freely move so that the sub pawl 13 is pivotally moved to the outer peripheral side on the locking base 14 by the biasing force of the ring spring 19 as shown in Fig. 6(b). Then, as shown in Fig. 6(c), the sub pawl 13 becomes in the locked state in which the sub pawl 13 is engaged with the inner teeth 2La of the side wall 2L which are positioned outside the outer periphery of the locking base 14.

The main pawl 12, the sub pawl 13, the cam body 14a including the receiving groove 14b, the cam shaft 15 including the cam head 15a, the sub pawl pivot shaft 16 including the shear portion 16a, and the ring spring 19 as mentioned above compose together "switching mechanism" described in claims. The switching mechanism is a mechanism which locks the spool 4 relative to the stationary member of the vehicle to prevent the spool 4 from rotating in the direction of withdrawing the seat belt 3 during normal operation, and the mechanism releases the locking of the spool 4 relative to the stationary member when the vehicle rapidly decelerates, and which locks the other end side in the axial direction of the torsion bar 7 to the stationary member to prevent this end side of the torsion bar 7 from rotating in the direction of withdrawing the seat belt 3 when the pretensioner 11 generates rotational driving force so as to cause rotational displacement in which the other end side in the axial direction of the torsion bar 7 advances in the direction of winding the seat belt 3 relative to the spool 4.

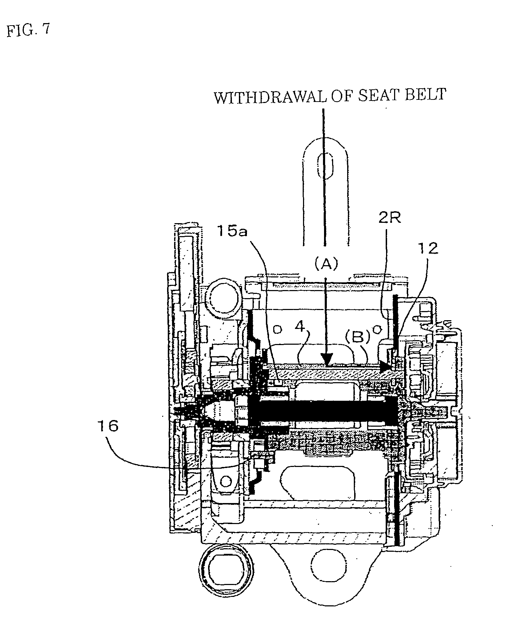

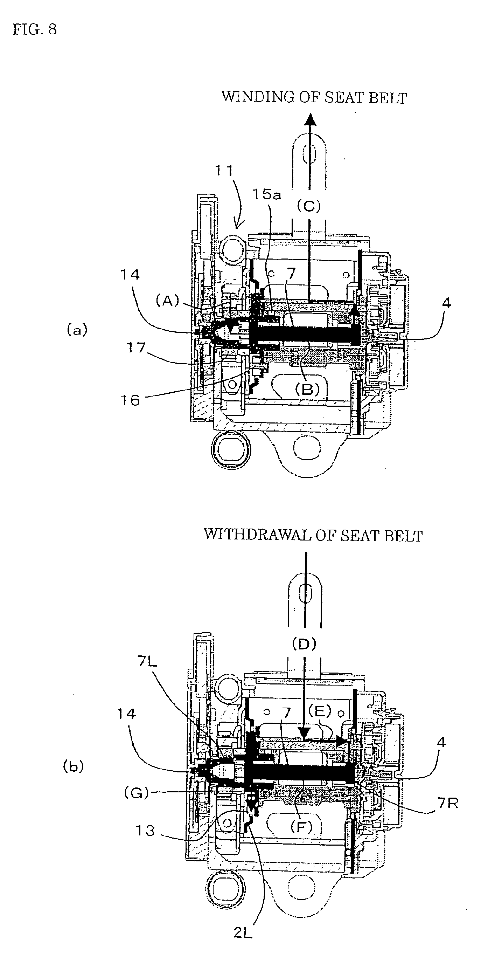

Hereinafter, the actions and the works and effects of the seat belt retractor 1 of this embodiment having the aforementioned structure will be described with reference to Fig. 7 and Fig. 8. It should be noted that arrows in Fig. 7 and Fig. 8 indicate the route through which load is applied.

Fig. 7 is an illustration for explaining the actions and the works and effects of the seat belt retractor 1 during the normal operation. As shown in Fig. 7, normally, the cam shaft 15 is positioned near the receiving groove 14b of the cam body 14a, but is out of the receiving groove 14b so that the main pawl 12 is in the unlocked state, while the shear portion 16a of the sub pawl pivot shaft 16 is in non-fractured state in which the shear portion 16a still does not fracture so that the sub pawl 13 is in the unlocked state. Therefore, the locking base 14, the torsion bar 7, and the spool 4 freely rotate together. When the seat belt 3 is not worn, the seat belt 3 is completely wound because of the biasing force of the spiral spring 5.

As the seat belt 3 is withdrawn at a normal speed for wearing (see (A) in Fig. 7), the spool 4 is rotated in the withdrawing direction of the seat belt 3 so that the seat belt 3 is smoothly withdrawn. After the tongue (not shown) slidably disposed on the seat belt 3 is inserted into and latched with the buckle fixed to the vehicle body, an excessively withdrawn portion of the seat belt 3 is wound up onto the spool 4 by the biasing force of the spiral spring 5 so that the seat belt 3 fits the occupant body without making the occupant feel pressure.

When the seat belt 3 is about to be rapidly withdrawn, a large deceleration generated at this time actuates the deceleration sensing means. According to the actuation of the deceleration sensing means, the lock actuating mechanism 6 moves the main pawl 12 pivot as mentioned above so that the main pawl 13 is engaged with the inner teeth of the side wall 2R of the frame 2. At this time, the cam head 15a enters into the receiving groove 14b of the cam body 14a, thereby allowing the pivotal movement of the main pawl 12. By the engagement of the main pawl 12, the spool 4 is locked to the frame 2 (see (B) in Fig. 7), thereby preventing the spool 4 from rotating in the withdrawing direction of the seat belt 3. During this, only the spool 4 is locked and the locking base 14 and the torsion bar 7 just stay because of no load is applied to the locking base 14 and the torsion bar 7.

Figs. 8(a), 8(b) are illustrations for explaining the actions, and the works and effects of the seat belt retractor 1 in the event of a rapid deceleration of the vehicle. As shown in Figs. 8(a), 8(b), in the event of a rapid deceleration of the vehicle such as an emergency, the pretensioner 11 is actuated according to the rapid deceleration and the rotational driving force is transmitted to the locking base 14 via the pinion 17 (see (A) in Fig. 8(a)) and is thus transmitted to the spool 4 via the torsion bar 7(see (B) in Fig. 8(a)) so that the spool 4 rotates in the winding direction of the seat belt 3 (see (C) in Fig. 8), thereby improving the restraint force for the occupant by the seat belt 3.

At the first stage just after the rapid deceleration of the vehicle, biasing force of the ring spring 19 is produced by the rotational driving of the pretensioner 11, but the shear portion 16a of the sub pawl pivot shaft 16 is still in the non-fractured state so that the sub pawl 13 does not rotate and is maintained in the unlocked state and the main pawl 12 is also maintained in the unlocked state.

After that, in the second stage, the seat belt 3 is pulled with large force exceeding the predetermined level by the vehicle occupant's body because of inertia of the rapid deceleration of the vehicle (see (D) in Fig. 8(b)) so that the large force in the withdrawing direction of the seat belt 3 acts on the spool 4 (see (E) in Fig. 8(b)). Accordingly, the shear portion 16a of the sub pawl pivot shaft 16 fractures and is thus broken so as to cause relative rotational displacement between the locking base 14 and the spool 4. Since this makes the sub pawl 13 free to pivot, the sub pawl 13 is pivotally moved to the outer peripheral position on the locking base 14 by the biasing force of the ring spring 19 so that the sub pawl 13 becomes to the locked state in which the sub pawl 13 is engaged with the inner teeth 2La of the side wall 2L (see Fig. 6(c)) and the locking base 14 is locked to the side wall 2L from rotating in the withdrawing direction of the seat belt 3.

At the same time, the cam head 15a is brought to come in contact with the outer periphery of the cam body 14a so as to rotate the cam shaft 15, thus making the main pawl 12 in the unlocked state in which the main pawl 12 is retracted to the inner peripheral position on the spool 4 (see Fig. 3(c)). Therefore, a portion7R on one end side in the axial direction (the right end portion in Figs. 8(a), 8(b)) of the torsion bar 7 connected to the spool 4 is rotationally displaced relative to a portion 7L on the other end side in the axial direction (the left end portion in Figs. 8(a), 8(b)) 7L (= at this point, this portion is fixed to the locking base 14 locked by the sub pawl 13 as mentioned above (see (G) in Fig. 8(b)), thus causing torsional deformation of the torsion bar 7. This torsional deformation (torsional torque) of the torsion bar 7 absorbs occupant's kinetic energy (see (F) in Fig. 8(b)) so as to limit the load applied on the seat belt 3 (EA mechanism).

Since the pretensioner 11 is disposed on the other end side in the axial direction of the spool 4 (the left side in Figs. 8(a), 8(b)) and is connected to the locking base 14 as mentioned above, the EA mechanism in which the one end (the right end in Figs. 8(a), 8(b)) portion 7R of the torsion bar 7 rotates relative to the other end (the left end in Figs. 8(a), 8(b)) portion 7L so that the torsion bar 7 is twisted can ensure the stable operation without being affected by the action of the pretensioner 11.

As mentioned above, in the seat belt retractor 1 of this embodiment, the spool 4 which is connected to one end side in the axial direction of the torsion bar 7 is locked during the normal operation, while the other end side in the axial direction of the torsion bar 7 is locked and the one end side in the axial direction of the torsion bar 7 and the spool 4 connected to the one end side are released for the torsional deformation of the torsion bar 7 in the event of a rapid deceleration of the vehicle. Therefore, stable EA action can be ensured without being affected by the action of the pretensioner 11.

It should be understood that the detailed structure of the aforementioned embodiment is not intended to strictly limit the scope of the present invention and various changes and modifications may be made.

### BRIEF DESCRIPTION OF THE DRAWINGS

[Fig. 1] Fig. 1 is an illustration showing the entire structure of a seat belt apparatus of an embodiment according to the present invention together with an occupant.
[Fig. 2] Fig. 2 is a vertical sectional view showing the entire schematic structure of a seat belt retractor.
[Fig. 3] Figs. 3(a)-3(c) are illustrations for explaining the structure of a main pawl on a spool side.
[Fig. 4] Fig. 4 is an external view showing the end surface, on one side in the axial direction, of the spool 4 and a frame as seen along an arrow A in Fig. 3(a).
[Fig. 5] Fig. 5 is an exploded perspective view for explaining the arrangement of the peripheral components of a locking base positioned on the other side in the axial direction of the spool.
[Fig. 6] Figs. 6(a)-6(c) are illustrations for explaining the action of a sub pawl when the locking base and the frame are seem along an arrow B in Fig.5.
[Fig. 7] Fig. 7 is an illustration for explaining the actions, and the works and effects of the seat belt retractor during the normal operation.
[Fig. 8] Figs. 8(a), 8(b) are illustrations for explaining the actions, and the works and effects of the seat belt retractor in the event of a rapid deceleration of the vehicle.

### EXPLANATION OF REFERENCE SIGNS IN DRAWINGS

- 1: seat belt apparatus
- 2: frame (stationary member)
- 2L: side wall
- 2R: side wall
- 3: seat belt
- 4: spool
- 6: lock actuating mechanism
- 7: torsion bar
- 11: pretensioner
- 12: main pawl (second pawl, second engaging member, switching mechanism)
- 13: sub pawl (first pawl, first engaging member, switching mechanism)
- 14: locking base (locking member)
- 14a: cam body (switching mechanism)
- 14b: receiving groove (switching mechanism)
- 15: cam shaft (switching mechanism)
- 15a: cam head (switching mechanism)
- 16: sub pawl pivot shaft (switching mechanism)
- 16a: shear portion (switching mechanism)
- 19: ring spring (spring, switching mechanism)
- M: occupant

## Claims

1. A seat belt retractor comprising:
a spool for winding up a seat belt;
a torsion bar which is arranged inside in the radial direction of said spool and one end side in the axial direction of which is connected to said spool and which torsionally deforms due to relative displacement between the one end side in the axial direction thereof and the other end side in the axial direction thereof so as to absorb kinetic energy of an occupant;
a pretensioner which is disposed on the other end side in the axial direction of said spool and which produces rotational driving force for rotating said spool in the direction of winding said seat belt when the vehicle rapidly decelerates; and
a switching mechanism which locks said spool relative to a stationary member of said vehicle to prevent said spool from rotating in the direction of withdrawing said seat belt during normal operation, and releases the locking of said spool relative to said stationary member when the vehicle rapidly decelerates, and which locks the other end side in the axial direction of said torsion bar to said stationary member to prevent the other end side of said torsion bar from rotating in the direction of withdrawing said seat belt when said pretensioner generates rotational driving force so as to cause rotational displacement in which the other end side in the axial direction of said torsion bar advances in the direction of winding said seat belt relative to the spool.

2. A seat belt retractor as claimed in claim 1, further comprising:
a locking member which is located on the other end side in the axial direction of said spool and is connected to the other end side in the axial direction of said torsion bar, wherein
said pretensioner applies rotational driving force, for rotating said spool in the direction of winding said seat belt, to said locking member when said vehicle rapidly decelerates, and wherein
said switching mechanism comprises a first engaging member for locking said locking member to the stationary member of said vehicle.

3. A seat belt retractor as claimed in claim 2, wherein said first engaging member is a pawl which is pivotally disposed on said locking member and locks said locking member when a relative rotational displacement is caused between said locking member and said spool.

4. A seat belt retractor as claimed in claim 3, wherein
either one of a pivot shaft of said first engaging member and said spool is provided with a shear portion which is engaged with the other one of the pivot shaft and said spool to prevent said pivot shaft from rotating and which fractures according to load applied, and wherein
said first engaging member is a pawl which is allowed to pivot freely and is biased in a direction of locking said locking member by a spring so as to conduct its locking action when said shear portion fractures.

5. A seat belt retractor as claimed in claim 4, wherein
said spring biases said pawl only when said locking member is rotated in the direction of winding said seat belt by said rotational driving force of said pretensioner.

6. A seat belt retractor as claimed in any one of claims 2 through 5, wherein
said switching mechanism comprises a second engaging member for locking said spool to the stationary member of said vehicle.

7. A seat belt retractor as claimed in claim 6, wherein
said second engaging member is a pawl which is pivotally disposed on one end side in said axial direction of said spool and which locks said spool according to the deceleration of said vehicle.

8. A seat belt retractor as claimed in claim 7, wherein
said locking member has a cam body disposed around the periphery of said torsion bar; wherein
said second engaging member has a cam shaft extending from the pivot shaft and a cam head disposed on the other end side in said axial direction of said cam shaft; and wherein
said cam body is configured to allow pivotal movement of said cam head such that the second engaging member can switch between the operation of locking said spool and the operation of unlocking said spool while there is no relative rotational displacement between said spool and said locking member, and to bring said cam head to come in contact with the cam body so as to force said second engaging member to release the locking of said spool when a relative rotational displacement is caused between said spool and said locking member.

9. A seat belt retractor as claimed in any one of claims 6 through 8, wherein
said second engaging member is configured such that its barycentric position is located near its pivotal center.

10. A seat belt retractor comprising:
a spool for winding up a seat belt;
a torsion bar which is arranged inside in the radial direction of said spool and one end side in the axial direction of which is connected to said spool and which torsionally deforms due to relative displacement between the one end side in the axial direction thereof and the other end side in the axial direction thereof so as to absorb kinetic energy of an occupant;
a locking base which is located on the other end side in the axial direction of said spool and is connected to the other end side in said axial direction of said torsion bar;
a pretensioner which is disposed on the other end side in said axial direction of said spool and which produces rotational driving force for rotating said spool in the direction of winding said seat belt when the vehicle rapidly decelerate and transmits the rotational driving force to said locking base; and
a first pawl of which pivot shaft is pivotally supported on said locking base, wherein during the normal operation, a shear portion as a part of said pivot shaft is engaged with said spool so that said first pawl is prevented from pivotally moving, and when a relative rotational displacement is caused between said locking base and said spool by the operation of said pretensioner, said shear portion fractures so that the first pawl is free to pivotally move and said first pawl thus locks said locking base to a stationary member of said vehicle by biasing force of a spring; and
a second pawl which is pivotally disposed on one end side in said axial direction of said spool, wherein during the normal operation, said second pawl locks said spool to the stationary member of said vehicle according to the deceleration of said vehicle, and said second pawl has a cam mechanism which releases the locking of said spool when a relative rotational displacement is caused between said locking base and said spool by the operation of said pretensioner, wherein
said cam mechanism has a cam shaft extending from the pivot shaft of said second pawl and a cam head which pivotally moves said second pawl through said cam shaft by moving along the configuration of a cam body formed on said locking base when a relative rotational displacement is caused between said spool and said locking base, and said pawl is pivotally moved to release the locking of said spool when a rotational displacement in which said spool advances in the direction of withdrawing said seat belt relative to said locking base is caused.

11. A seat belt apparatus comprising:
a seat belt for restraining an occupant;
a seat belt retractor for winding up one end side of said seat belt in such a manner as to allow said seat belt to be withdrawn;
a tongue which is attached to said seat belt; and
a buckle device which can be latched said the tongue to wear said seat belt to the occupant, wherein
said seat belt retractor comprises:
a spool for winding up said seat belt;
a torsion bar which is arranged inside in the radial direction of said spool and one end side in the axial direction of which is connected to said spool and which torsionally deforms due to relative displacement between the one end side in the axial direction thereof and the other end side in the axial direction thereof so as to absorb kinetic energy of an occupant;
a pretensioner which is disposed on the other end side in the axial direction of said spool and which produces rotational driving force for rotating said spool in the direction of winding said seat belt when the vehicle rapidly decelerates; and
a switching mechanism which locks said spool relative to a stationary member of said vehicle to prevent said spool from rotating in the direction of withdrawing said seat belt during normal operation, and releases the locking of said spool relative to said stationary member when the vehicle rapidly decelerates, and which locks the other end side in the axial direction of said torsion bar to said stationary member to prevent the other end side of said torsion bar from rotating in the direction of withdrawing said seat belt when said pretensioner generates rotational driving force so as to cause rotational displacement in which the other end side in the axial direction of said torsion bar advances in the direction of winding said seat belt relative to the spool is caused.
